# EUROPEAN PATENT APPLICATION

(11) **EP 1 775 167 A2**
(43) Date of publication of application: **18.04.2007**
(21) Application number: 05256335.0
(22) Date of filing: 12.10.2005
(51) Int. Cl.: B60R 11/02

(54) **Audio system**

(71) Applicant: BRITISH TELECOMMUNICATIONS public limited company, London EC1A 7AJ (GB)
(72) Inventor: Dalton, Gary Keith, Suffolk, IP12 1DZ (GB)
(74) Representative: Chabasseur, Vincent Robert

(57) **Abstract**

The present invention relates to an audio system, in particular to an audio system with a removable panel. There is provided an audio system including: a base unit with a control stage; and a detachable face plate arranged to releasably connect to the base unit, the detachable face plate having user input means for operating the audio system, wherein the detachable face plate is operable independent of the base unit as a handheld wireless communications device, and wherein the removable face plate has a memory with an identifier (a SIM card) stored therein, the control stage being configured to read the identifier and control the audio system in dependence on the read identifier. For security purposes, the operation of the audio system is prevented if the identifier is not an authorised identifier.

## Description

The present invention relates to an audio system, in particular to an audio system with a removable panel.

The theft of an audio system from a vehicle can be greatly distressing. In order to reduce the temptation for a potential thief to break into a vehicle and remove the audio system therein, it is known for an audio system to have a removable front panel or facia without which the audio system cannot be operated. However, many users fail remove the front panel from the vehicle when the vehicle is not in use. Instead, a user will often simply hide the front panel within the vehicle. As a result, a thief will often be able to find the front panel. In order to encourage a user to remove the front panel from the vehicle when the vehicle is left unattended it is known to incorporate telephony functionality into the front panel. However, such known systems are not always secure or convenient.

According to the present invention, there is provided an audio system including: a base unit with a control stage; and a detachable face plate arranged to releasably connect to the base unit, the detachable face plate having user input means for operating the audio system, wherein the detachable face plate is operable independent of the base unit as a handheld wireless communications device, and wherein the removable face plate has a memory with an identifier stored therein, the control stage being configured to read the identifier and control the audio system in dependence on the read identifier.

The invention will now be further described, by way of example only, with reference to the following drawings in which:
Figure 1 is a schematic view of an audio system in accordance with the present invention;

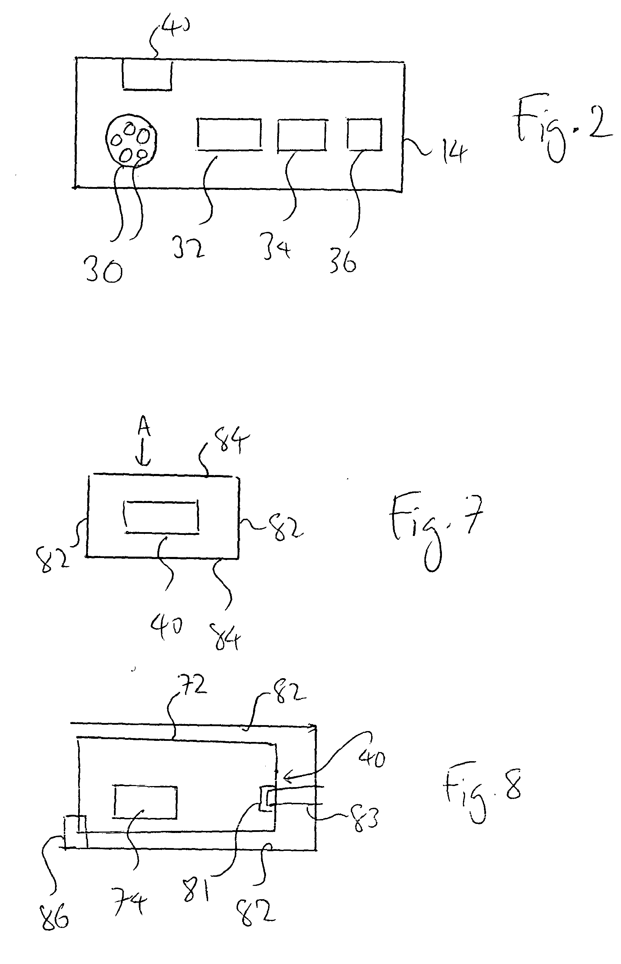

Figure 2 is a schematic view of a front panel of the audio system of Figure 1;
Figure 3 is a more detailed front view of the front panel in an extended state;
Figure 4 is a view of the front panel along the direction marked A in Figure 3;
Figure 5 is a front view of the front panel in a contracted state;
Figure 6 is a view of the front panel along the direction marked A in Figure 5;
Figure 7 is a schematic view of mounting means for releasably mounting a SIM card; and,
Figure 8 is a schematic view of the mounting means along the direction marked A in Figure 7

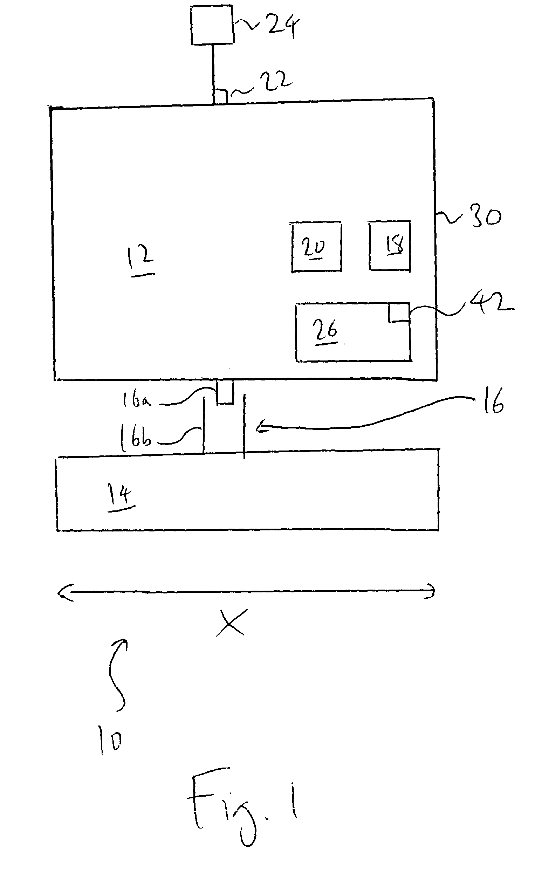

Figure 1 shows an in-car audio system 10 which includes a base unit 12 and a removable face plate 14 releasable connected to the base unit by a releasable connector 16. The face plate has telephony functionality allowing it to operate as a mobile or cellular telephone independently of the base unit 12. When the audio system 10 is not in use, the face plate 14 can be released from the base unit and used as a mobile telephone handset in the normal way. The base unit is configured such that it cannot easily be operated without the front panel. Thus, with the front panel removed, the base unit is less attractive to a potential thief. Furthermore, because the front panel has telephone functionally, a user is likely to be encouraged to remove and carry with them the front panel, since the front panel will replace the mobile telephone handset which the user would otherwise have needed to carry.

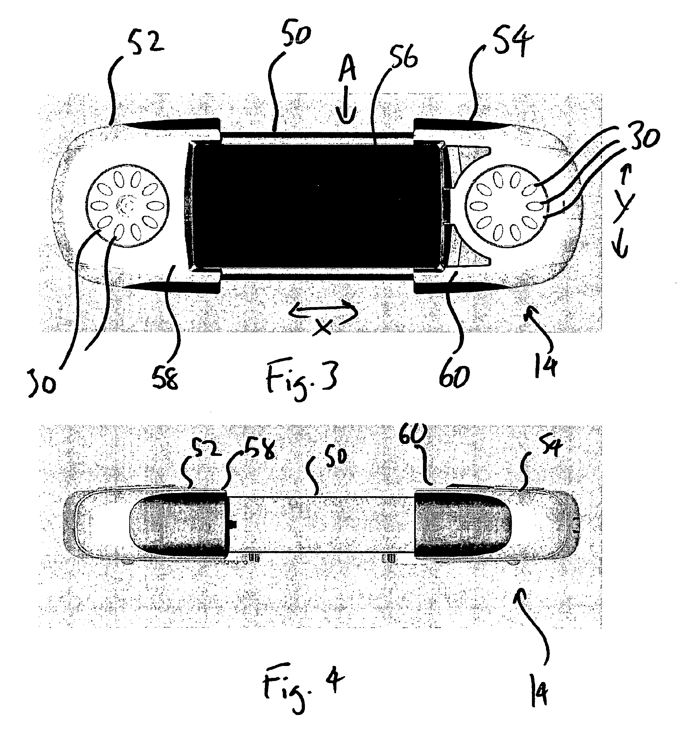

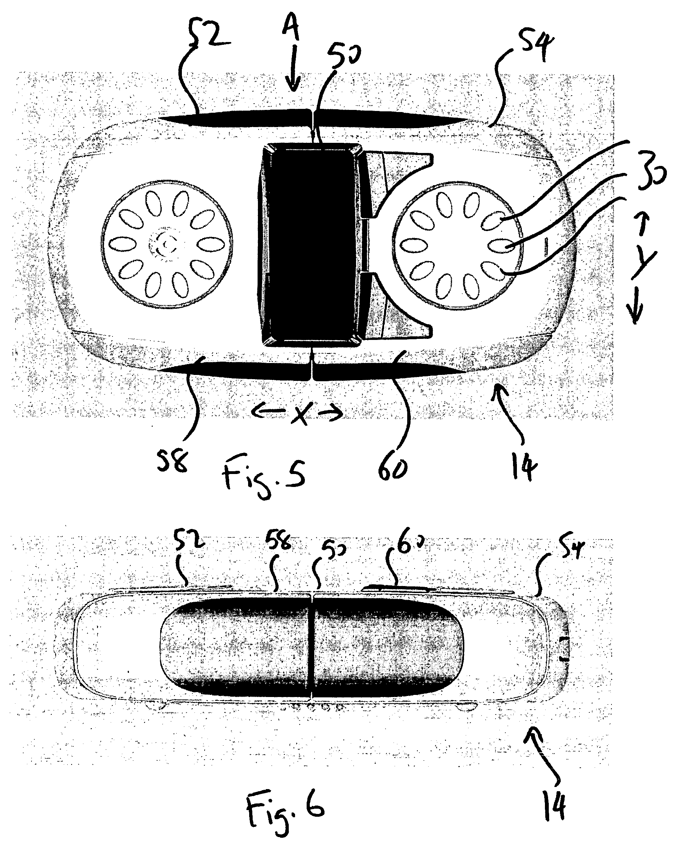

Figure 3 shows a front view of the external features of the front panel 12. The front panel has a first portion 50, either side of which are provided a second portion 52 and a third portion 54 respectively. The first portion 50 has a display 56 that is generally rectangular, having a long axis X and a short axis Y. The second and third portions 52, 54 are each slidingly engaged with the first portion, such that the second and third portions can each be moved along the X axis between an extended position, as shown in Figures 3 and 4, and a contracted position, as shown in Figures 5 and 6. In the extended position, the second and third portions are spaced apart, each projecting beyond the first portion in the X that is direction. In the contracted state, the second and third portions are close together, thereby reducing the width of the front panel in the X direction. The second and third portions each include a respective cover region 58, 60, which in the contracted state overlie part of the screen 56. As shown in Figure 5, the cover regions are shaped such that when the front panel is in the contracted state, there remains an opening between the cover portions 58, 60 through which the screen is partially exposed. In the expanded state, the cover portions are located away from the screen, with the result that the screen is more fully exposed, as can be seen from Figure 3.

The front panel will normally be connected to the base unit in the expanded state, allowing the larger display area to be used for displaying information relating to the in-car use of the audio system. For example, the display may indicate the identity of a radio station being received, the volume level etc. Conveniently, the width of the front panel in the extended state is similar to the width of the base unit, which is often of a standard size.

When the front panel is removed from the base unit, the front panel can be placed in the contracted state by pushing the second and third portions towards one another. The front panel in the contracted state can then more easily be carried in the pocket of a user, occupying less space than it would in the extended state. Furthermore, the larger screen area visible in the extended state is less likely to be needed when the front panel is disconnected from the base unit, since in the disconnected state the front panel will be used as a mobile telephone, where only a small visible screen area is normally needed.

The base unit includes a receiving stage 18 for receiving audio signals, and an amplifier stage 20 for amplifying the received audio signals. Amplified audio signals are passed to an output 22 to which loudspeakers 24 are connected. A controller stage 26 is provided for controlling the operation of the audio system 10, which controller stage 26 is electrically coupled to the front panel 14 when the front panel is in place on the base unit 10. A releasable electrical connector between the base unit 12 and the front panel 14 is provided by a connector 16, which includes a male member 16a mounted on a forward surface of the base unit 12, and a female member 16b mounted within the front panel on a rear surface thereof. The front panel 14 includes actuation means, here in the form of a plurality of operating keys 30, each of which is connected to a processor stage 32 within the front panel. The processor stage 32 is itself connected to a telephony stage 34 for providing telephony functionality to the front panel 14. When the front panel is connected to the base unit 14, the processor stage 32 is coupled to the control stage 26 of the base unit 12.

The processor stage 32 is configured to detect when the front panel 14 is connected to the base unit 12 and independence on whether the front panel is connected, allow operation of the front panel in one of at least two modes.

In an audio mode, in which the front panel is connected to the base unit, the processor stage 32 passes the output from the operating keys 30 to the controi stage 26 of the base unit 12, so that the operating keys can be used to control the operation of the audio system 10. For example, one or more keys may be used to control the volume of sound emitted by the audio system. Likewise, when the front panel is connected to the base unit, the processor stage 32 is configured to control the display 56 such that the display shows information useful for operating the audio system 10. The processor stage 32 is configured to detect when the front panel is in a disconnected state, that is, when the front panel is disconnected from the base unit. In the disconnected state, the front panel operates in a telephony mode. In the telephony mode, the processor stage 32 is configured to pass signals from the operating keys 30 to the telephone stage 34, so that the operating keys 30 can be used to operate the front panel as a cellular or mobile telephone. Likewise, in the disconnected state, the processor stage 32 will control the display 56 such that the display shows information useful for the operation of the front panel as a mobile telephone. (Clearly, the distinction between the different stages/memories in the audio system are conceptual as more than one stage may be formed on a single electronic chip device).

The front panel includes a removable memory 40 device, in which there is stored an identifier. The memory device is realisably or temporarily mounted in the front panel as shown in Figures 7 and 8, so that if required, the memory device can easily be removed and changed. Preferably, the removable memory device 40 is in the form of a SIM card (also known as a Subscriber Identity Module), the identifier being (or at least associated with) a telephone number by which the front panel can be called when in the telephony mode. The SIM card telephone number will also be stored in a memory 42 of the control stage. When the front panel is connected to the base unit, the processor stage 32 is configured to pass the number of the SIM card to the control stage 26 of the base unit 12. In response to receiving the SIM card number from the front panel, the control stage is configured to compare the locally stored SIM card number with the received number, and only permit operation of the audio system if the stored and received numbers are the same (or if at least part of the received number is the same). This will make it difficult for an unauthorised person in possession of another front panel to use the audio system, thereby reducing the temptation for a potential thief to steal the base unit.

The SIM card number may be entered into the memory of the control stage 26 in different ways. In one embodiment, the very first time the base unit is connected to the front panel, the control stage is configured to transmit a message for display on the display 55 inviting a user to input the telephone number of the SIM card in the front panel, which telephone number will be stored for further authorisation events. Alternatively, the control stage of the base unit may be configured to communicate with the processing stage 32 of the front panel 14 in order to extract the SIM card number automatically when the front panel is first connected.

However, in a preferred embodiment, upon detecting a SIM card number that is unauthorised, the control stage is configured to transmit a request message to the processor stage of the front panel, in response to which the processor stage causes a message to be displayed on the display 56 inviting a user to enter a security code. The security code will have been pre-installed in the memory 42 of the base unit upon manufacture, and will be conveyed to an authorised user when the user purchases the audio system. When a correct security code has been entered, the control stage is configured to permit the operation of the audio system, and is configured to store the SIM card number as an authorised number, such that when the control stage subsequently detects the same SIM card number, the audio system can be operated without entering the security code again.

To enter the security code, or a SIM card number, the operating keys 32 of the front panel can be used, which will each be associated with a digit in the normal way. In one embodiment, there will be stored in the memory 42 of the control stage 26 a plurality of authorised SIM card numbers, so that different users, each with a respective front panel, can use the audio system at different times. Each SIM card number will be mapped to a particular combination of audio settings or preferences, such as a particular radio station setting that determines the radio frequency that is received by the receiver stage 18. When a user connects the front panel to the base unit, the controller stage 26 is configured to automatically set the settings to those mapped to the connected SIM card number. Hence, the audio system will be automatically customised for each user. Other settings may be mapped to a SIM card number, such as a tone setting for controlling the frequency distribution of the sound produced by the audio system, and a balance setting for controlling the proportion of sound produced by each of the loud speakers 24. Alternatively, the settings could be stored in a further memory such as a removable SD card mounted in the front panel. When the front panel is connected to the base unit, the control stage 26 of the base unit would be configured to read the settings from the SD card.

Figures 7 and 8 show schematically a SIM card 40 which includes a base plate 72 on which there is secured an electronic device 74 which includes memory functionality. When connected to the face plate, the SIM card is lodged in a slot 80 formed by guide walls 82,84, the card 40 being retained in the slot by a resilient clip 86. The SIM card 40 has connector pads 81 towards a forward end of the base plate 72, corresponding connector leaves 83 being mounted at the rear end of the slot such that when the card is in the slot, the card is electrically connected to the face plate. To remove the card, the clip is released, and the card is manually pulled from the slot, the card being guided out of and into position by the guide walls.

In another embodiment, the front panel may include radio and/or mp3 functionality such that the front panel can act as a stand alone radio /mp3 player in it's own right using a headset. In such a situation, by connecting the front panel to the base unit, advantage would be taken of the car's aerial, amplifier and speaker system and enhanced electronics for interference, suppression commonly found in vehicles for good reception

Furthermore, the physical button layout and/or functionality on the device can be duplicated on a car steering wheel for safer use when driving.

Optionally, the front panel could be docked in a home stereo system to act as a front end controller or alternatively it could be used remotely with a wireless link to the home stereo if preferred.

The telephony functionality of the front panel need be disabled when the front panel is connected to the base unit: for example, fully hands free telephony functionality could be enabled upon connection to the base unit, a microphone being connected to the base unit to pick up the voice of the user, whiles the speakers connected to the base unit will convey the voice of the other party.

## Claims

**1.** An audio system including: a base unit with a control stage; and a detachable face plate arranged to releasably connect to the base unit, the detachable face plate having user input means for operating the audio system, wherein the detachable face plate is operable independent of the base unit as a handheld wireless communications device, and wherein the removable face plate has a memory with an identifier stored therein, the control stage being configured to read the identifier and control the audio system in dependence on the read identifier.

**2.** An audio system as claimed in claim 1, wherein the control stage controls the audio system such that the operation of the audio system is prevented if the read identifier is not an authorised identifier.

**3.** An audio system as claimed in claim 1 or claim 2, wherein the control stage controls the audio system so as to allow or select an operational mode of the audio system in dependence on the read identifier.

**4.** An audio system as claimed in any preceding claim, wherein the base unit has a memory with at least one authorised identifier stored therein, the base unit being configured to control the operation of the audio system in dependence on whether the read identifier matches an authorised identifier.

**5.** An audio system as claimed in claim 3 or claim 4, wherein the audio system has a plurality of operational modes, and wherein there are a plurality of authorised identifiers, each identifier being associated with a respective operational mode.

**6.** An audio system as claimed in any of the preceding claims, wherein the audio system includes radio receiver for receiving radio waves within a frequency range, and wherein the audio system has a plurality of operational modes each of which is at least in part defined by the frequency of the received radio waves.

**7.** An audio system as claimed in any of the preceding claims, wherein the audio system has a plurality of operational modes defined at least in part by one or more of the following characteristics: a volume setting for controlling the volume of sound produced by the audio system; a tone setting for controlling the frequency distribution of the produced sound; and, a balance setting for controlling the proportion of sound produced by one or more of a plurality of loudspeakers.

**7.** An audio system as claimed in any of the preceding claims, wherein the face plate includes releasable connection means for releasably connecting to the memory.

**8.** An audio system as claimed in any of the preceding claims, wherein the identifier is permanently stored in the memory.

**9.** An audio system as claimed in any of the preceding claims, wherein the identifier is a telephone number for by which the face plate can be accessed when operating as a wireless communications device.

**10.** An audio system as claimed in any of the preceding claims, wherein the face plate has a first portion and a second portion, which first and second portions are movable relative to one another such that the face plate can be placed in an extended state for use when connected to the base unit, and in a contracted state for use when disconnected from the base unit.

**11.** An audio system as claimed in claim 10, wherein the first and second portions are in sliding engagement with one another.

**12.** An audio system as claimed in claim 10 or claim 11, wherein there is provided a third portion in sliding engagement with the second portion.

**13.** An audio system including: a base unit; and a detachable face plate arranged to releaseably connect to the base unit, the detachable face plate having user input means for the input of user instructions which control the operation of the base unit, wherein the detachable face plate is operable independent of the base unit as a handheld wireless communications device, and wherein the removable face plate has a first portion and a second portion which first and second portions are movable relative to one another such that the face plate can be placed in an extended state for use when connected to the base unit, and in a contracted state for use when disconnected from the base unit.

**14.** An audio system as claimed in claim 13, wherein the removable face plate includes a central portion with a display, and at least one side portion in sliding engagement with the central portion..

**15.** An audio system as claimed in claim 14, wherein the or each side portion includes a cover portion for covering the display, such that in the extended state a larger area of the display is visible than in the contracted state.
